Europäisches Patentamt

European Patent Office

Office européen des brevets

(19)

(11) **EP 1 038 160 B1**

(12) **EUROPÄISCHE PATENTSCHRIFT**

(45) Veröffentlichungstag und Bekanntmachung des Hinweises auf die Patenterteilung:
**03.12.2003  Patentblatt 2003/49**

(51) Int Cl.[7]: **G01F 7/00**, G01F 25/00, G01F 1/684, G01F 1/688, G01F 1/704, G01F 1/708

(21) Anmeldenummer: **97949911.8**

(22) Anmeldetag: **12.11.1997**

(86) Internationale Anmeldenummer:
**PCT/DE97/02647**

(87) Internationale Veröffentlichungsnummer:
**WO 98/022784 (28.05.1998 Gazette 1998/21)**

(54) **VERFAHREN UND VORRICHTUNG ZUR SELBSTKOMPENSIERENDEN MESSUNG DES VOLUMENDURCHFLUSSES VON GASEN**

METHOD AND DEVICE FOR THE SELF-COMPENSATING MEASUREMENT OF VOLUME FLOW RATE OF GASES

PROCEDE ET DISPOSITIF POUR LA MESURE AUTOCOMPENSEE DU DEBIT VOLUMETRIQUE DE GAZ

(84) Benannte Vertragsstaaten:
**AT BE CH DE DK ES FR GB GR IE IT LI NL PT SE**

(30) Priorität: **15.11.1996  DE 19647350**

(43) Veröffentlichungstag der Anmeldung:
**27.09.2000  Patentblatt 2000/39**

(73) Patentinhaber: FMP Fluid Measurements and Projects GmbH
**91083 Baiersdorf (DE)**

(72) Erfinder:
• **JOVANOVIC, Jovan**
  **D-91058 Erlangen (DE)**
• **DURST, Franz**
  **D-91094 Langensendelbach (DE)**

(74) Vertreter: **Gassner, Wolfgang, Dr. Patentanwalt, Nägelsbachstrasse 49a 91052 Erlangen (DE)**

(56) Entgegenhaltungen:
**EP-A- 0 373 929        WO-A-94/20825**

• **RAWLINS W ET AL: "THERMAL ANEMOMETRY FOR MASS FLOW MEASUREMENT IN OSCILLATING CRYOGENIC GAS FLOWS" REVIEW OF SCIENTIFIC INSTRUMENTS, Bd. 64, Nr. 11, 1.November 1993, Seiten 3229-3235, XP000420911**

**Beschreibung**

Die Erfindung betrifft ein Verfahren und eine Vorrichtung zur selbstkompensierenden Messung des Volumendurchflusses von Gasen nach dem Oberbegriff der Ansprüche 1 und 15.

Ein Verfahren und eine Vorrichtung der genannten Art sind aus der DE 37 32 856 C2 bekannt. Dabei wird vorrichtungsseitig ein Luftmengen-Messer mit einer Strömungsmeßeinrichtung vorgeschlagen, die einen Wirbelstraßen-Luftmengen-Messer und einen Hitzdraht- oder Heißfilm-Luftmengen-Messer enthält, deren Sensoren in einem gemeinsamen Strömungskanal angeordnet sind.

Bei einem Hitzdraht-Luftmengen-Messer wird der Volumenfluß des Gases über die von einem im Gasstrom angeordneten Hitzdraht abgegebene Wärmemenge ermittelt. Dazu wird der Hitzdraht üblicherweise über eine Wheatstone'sche Brücke auf konstanter Temperatur gehalten. Aus der zur Aufrechterhaltung der konstanten Temperatur erforderlichen elektrischen Energie kann die an das Gas abgegebene Wärmemenge und daraus der Volumenfluß des Gases bestimmt werden. - Ein Hitzdraht-Luftmengen-Messer hat den Vorteil, daß er einen weiten Meßbereich und eine hohe Meßdynamik aufweist. Dabei ist er allerdings mit dem Nachteil behaftet, eine nicht lineare Kennlinie zu haben. Darüber hinaus kann die Meßgenauigkeit eines Hitzdraht-Luftmengen-Messers durch Veränderungen des Strömungsprofils negativ beeinflußt werden. Es ist daher notwendig, den Hitzdraht-Luftmengen-Messer vor der Messung zu kalibrieren. Zu diesem Zweck wird der Hitzdraht-Luftmengen-Messer mit einem eine weitgehend lineare Kennlinie aufweisenden Wirbelstraßen-Luftmengen-Messer kombiniert. So können in einem überlappenden Arbeitsbereich die durch den Hitzdraht-Luftmengen-Messer gemessenen Werte mit den vom Wirbelstraßen-Luftmengen-Messer gemessenen Werten verglichen und ggf. kompensiert werden. - Voraussetzung für das Funktionieren der Kompensation ist allerdings, daß die Strömungsmeßeinrichtungen vor Beginn der Messung kalibriert werden. Ein weiterer Nachteil ist, daß der Wirbelstraßen-Luftmengen-Messer nur in einer Strömungsrichtung funktioniert.

Auch aus der EP 0 465 182 A2 ist eine Kombination eines Hitzdraht-Luftmengen-Messers mit einem weiteren Luftmengen-Messer zur Korrektur, z.B. einem Karman Vortex Luftmengen-Messer, bekannt. Die vom Karman Vortex Luftmengen-Messer gewonnenen Werte werden zur Korrektur bzw. Kalibrierung des Hitzdraht-Luftmengen-Messers verwendet.

Aus der DE 44 27 554 C2 ist ein Wärmeimpuls-Durchflußmesser bekannt, der einen Wärmeimpulssender und zwei Wärmeimpulsempfänger aufweist. Zur Messung wird vom Wärmeimpulssender ein Sendeimpuls abgegeben, der zeitversetzt von den beiden Wärmeimpulsempfängern aufgenommen wird. Aus der Laufzeitdifferenz der aufgenommenen Signale wird der Volumenstrom ermittelt. Eine gegenseitige Kompensation zweier unterschiedlicher Strömungsmeßeinrichtungen findet hier nicht statt. Der bekannte Wärmeimpuls-Durchflußmesser ist daher nicht besonders genau.

Die bekannten Vorrichtungen ermöglichen eine weitgehend exakte Messung innerhalb eines überlappenden Arbeitsbereichs. Außerhalb des überlappenden Arbeitsbereichs ist, insbesondere bei geringen Volumenströmen, eine exakte Messung nach dem Stand der Technik nicht möglich. Auch weisen die bekannten Vorrichtungen eine nicht allen Anforderungen genügende Meßdynamik auf. Die Ausgestaltung des die Sensoren enthaltenden Strömungskanals bzw. der Meßstrecke ist kompliziert und erfordert daher einen hohen Herstellungsaufwand. Der Strömungskanal kann daher nicht als billiges Austauschteil zur Verfügung gestellt werden, was insbesondere bei medizintechnischen Anwendungen wegen der hier gültigen strengen Hygienevorschriften wünschenswert wäre.

Aufgabe der Erfindung ist es, ein Verfahren sowie eine Vorrichtung anzugeben, mit denen die Nachteile des Stands der Technik beseitigt werden. Insbesondere soll ein selbstkompensierendes Verfahren mit einem weiten Meßbereich und einer großen Meßdynamik zur genauen Messung kleiner Volumenströme angegeben werden. Ferner soll eine Vorrichtung zur selbstkompensierenden Messung des Volumendurchflusses von Gasen bereitgestellt werden, die einen weiten Meßbereich und eine hohe Meßdynamik zur Verfügung stellt sowie insbesondere eine einfach aufgebaute und kostengünstig herstellbare Meßstrecke aufweist.

Diese Aufgabe wird durch die Merkmale der Ansprüche 1 und 15 gelöst. Zweckmäßige Weiterbildungen ergeben sich aus den Merkmalen der Ansprüche 2 bis 14 sowie 16 bis 28.

Nach dem verfahrensseitigen Aspekt der Erfindung ist vorgesehen, daß von einem im Gasströmungsdurchgang angeordneten Geber der ersten Strömungsmeßeinrichtung ein thermisches Signal an das Gas abgegeben, das thermische Signal von einem stromabwärts angeordneten Sensor der ersten Strömungsmeßeinrichtung nach einer Laufzeit erfaßt, und die ersten Meßwerte aus der Laufzeit ermittelt werden. - Das vorgeschlagene Verfahren ermöglicht eine Messung in einem weiten Meßbereich von mindestens 1: 500, insbesondere eine genaue Messung kleiner Volumenströme. Es zeichnet sich darüber hinaus durch eine besonders große Meßdynamik aus. Die Zusammensetzung des zu messenden Gases sowie die Umgebungsparameter, wie Temperatur oder Druck, werden durch das Verfahren kompensiert.

Vorteilhafterweise wird als thermisches Signal ein periodisches, vorzugsweise sinusförmiges, Signal abgegeben. In diesem Fall kann die Laufzeit durch die Phasendifferenz zwischen dem abgegebenen thermischen Signal und dem vom Sensor erfaßten thermischen Signal ermittelt werden. - Das ermöglicht eine besonders hohe Meßdynamik der ersten Strömungsmeßeinrichtung.

Nach einer weiteren verfahrensmäßigen Ausgestaltung kann die zweite Strömungsmeßeinrichtung ein im Gasströmungsdurchgang angeordnetes beheizbares Element aufweisen. Bei der zweiten Stromungsmeßeinrichtung kann es sich um einen an sich bekannten Hitzdraht- oder Heißfilm-Luftmengen-Messer handeln. Eine solche Strömungsmeßeinrichtung zeichnet sich durch einen besonders großen Meßbereich und eine große Meßdynamik aus. Die zweite Strömungsmeßeinrichtung kann aber auch andere geeignete Meßprinzipien verwenden.

Vorzugsweise werden zweite Meßwerte infolge der vom beheizbaren Element an das Gas abgegebenen Wärmemenge ermittelt. Die ersten und dazu korrespondierende zweite Meßwerte können einer Kalibriereinrichtung zugeführt und dort verglichen werden. Bei Überschreiten einer vorgegebenen Differenz zwischen den korrespondierenden ersten und zweiten Meßwerten kann so ein Korrekturfaktor zur Korrektur der zweiten Meßwerte ermittelt werden, so daß die zweiten Meßwerte an die ersten Meßwerte angeglichen werden können. So können die zweiten Meßwerte einfach kalibriert werden.

In weiterer vorteilhafter Ausgestaltung ist der Gasströmungsdurchgang aus einem rohrartigen Körper hergestellt, in dem der Geber, der Sensor und das beheizbare Element aufgenommen sind. Dabei können der Geber und der Sensor in parallel zueinander stehenden Ebenen angeordnet sein, die vorzugsweise senkrecht zur Strömungsrichtung des Gases orientiert sind. Das erleichtert die Auswertung der ersten und zweiten Meßwerte.

Der Geber und der Sensor können als in den Gasströmungsdurchgang ragende Stifte ausgebildet sein, die vorzugsweise um einen Winkel bezüglich der Mittelachse des rohrartigen Körpers gegeneinander verstellt sind. Dadurch wird eine zuverlässige Erfassung des Heizsignals durch den Sensor gewährleistet.

Der Geber und/oder der Sensor und/oder das beheizbare Element können auch als Film/e ausgebildet sein, der/die auf die Innenwand des rohrartigen Körpers angebracht ist/sind. Es hat es sich als zweckmäßig erwiesen, daß der Sensor in einem Abstand von mindestens 1 mm vom Geber angeordnet ist. Der rohrartige Körper kann aus Glas, vorzugsweise Geräteglas, oder Kunststoff hergestellt sein. Zweckmäßigerweise ist der rohrartige Körper lösbar mit einer Heiz- und/oder Kalibriereinrichtung verbunden. Die vorgenannten Merkmale erlauben die Herstellung einer besonders einfachen und kostengünstig herstellbaren Meßstrecke, die ohne weiteres austauschbar ist. Sie besteht im einfachsten Fall aus einem Kunststoffrohr, an dessen Innenwand das beheizbare Element, das Heizelement und der Sensor in Form von aufeinanderfolgenden ringartigen Filmen angebracht sind.

Nach dem vorrichtungsseitigen Aspekt der Erfindung ist vorgesehen, daß die erste Strömungsmeßeinrichtung einen im Gasströmungsdurchgang angeordneten Geber zur Abgabe eines thermischen Signals an das Gas und einen stromabwärts angeordneten Sensor zur Erfassung des Heizsignals nach einer Laufzeit aufweist, so daß aus der Laufzeit die ersten Meßwerte ermittelbar sind. - Die erfindungsgemäße Vorrichtung zeichnet sich vor allem durch einen weiten Meßbereich und eine große Meßdynamik aus. Sie eignet sich insbesondere zur Messung kleiner Volumendurchflüsse, wie sie beispielsweise in Beatmungsgeräten vorkommen.

Die nach dem Prinzip der thermischen Laufzeitmessung arbeitende erste Strömungsmeßeinrichtung erlaubt eine hohe zeitliche Auflösung der Messung. Diese ist durch die Frequenz des vorzugsweise verwendeten sinusförmigen Heizsignals sowie die Zeitkonstante des Heizdrahts begrenzt. Zweckmäßigerweise werden Heizsignale mit einer möglichst hohen Frequenz verwendet. Für die Zeitkonstante gilt

$$\tau = \frac{\rho_w c_w d^-}{4 k_f Nu}$$

Nu = Nusseltzahl = $0{,}56\, Re^{0,45} + 0{,}24$ für einen Hitzdraht
$\rho_w$ = Dichte des Drahtes
$c_w$ = Wärmekapazität des Drahtes
d = Drahtdurchmesser
$k_f$ = Wärmediffusivität des Fluids

Bei niedrigen Volumendurchflüssen spielt die Zeitkonstante $\tau$ ein wichtige Rolle. Wird als Geber beispielsweise ein Wolframdraht mit einem Durchmesser von 5 μm verwendet, so kann mit einer Frequenz von 30 - 60 Hz eine Strömungsgeschwindigkeit in der Größenordnung von 0,05 m/s zuverlässig erfaßt werden. Im Falle eines aus Platin oder einer Platin-Rhodium-Legierung (90 % Platin, 10 % Rhodium) hergestellten Drahts würde dessen Durchmesser 12,5 μm betragen.

Sofern für die zweite Strömungsmeßeinrichtung als beheizbares Element ein auf einer konstanten Temperatur zu haltender Hitzdraht verwendet wird, gilt für die Heizspannung:

$$E^2 = A + BU^\eta.$$

A und B sind Kalibrierkonstanten, η hat in den meisten Fällen den Wert 0,45. U ist die zu bestimmende Strömungsgeschwindigkeit bzw. der Volumendurchfluß. Wenn die beiden Kalibrierkonstanten bekannt sind, kann ein weiter Meßbereich mit hoher Genauigkeit abgedeckt werden. Die Kalibrierkonstanten können durch den ersten Meßwert ermittelt werden.

Der die Meßstrecke enthaltende rohrartige Körper ist vorteilhafterweise aus einem Rohr mit einem Durchmesser von 1 bis 2 cm gebildet. Die eigentliche Meßstrecke befindet sich dabei in einer Rohrverengung, deren Querschnittsfläche etwa die Hälfte der Rohrquerschnittsfläche beträgt. In der Rohrverengung ist ein nahezu konstantes Strömungsprofil gewährleistet, was eine besonders genaue Messung ermöglicht.

Ein Ausführungsbeispiel der erfindungsgemäßen Vorrichtung wird anhand der folgenden Zeichnung näher beschrieben. Hierin zeigen:

Fig. 1    ein funktionelles Blockdiagramm mit einem erfindungsgemäßen rohrartigen Körper, und

Fig. 2    einen Graphen zur Ermittlung der Laufzeit durch Phasenverschiebung.

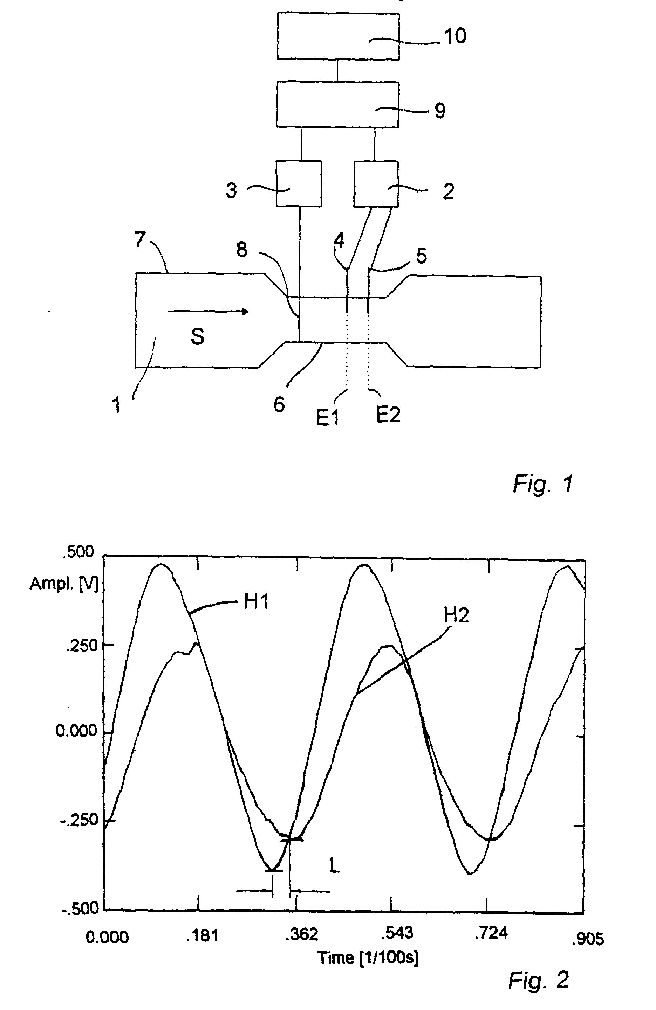

Fig. 1 zeigt ein funktionelles Blockdiagramm mit einem erfindungsgemäßen rohrförmigen Körper. Die Vorrichtung umfaßt einen Gasströmungsdurchgang 1 sowie eine erste Strömungsmeßeinrichtung 2 und eine zweite Strömungsmeßeinrichtung 3. Die erste Strömungsmeßeinrichtung ist mit einem Geber 4 sowie einem stromabwärts einer Strömungsrichtung S des Gases angeordneten Sensor 5 verbunden, welche in einem verengten Bereich 6 eines Rohrs 7 angeordnet sind. Die zweite Strömungsmeßeinrichtung 3 steht mit einem ebenfalls in verengten Bereich 6 angeordneten Heizdraht 8 in Verbindung. Die erste 2 sowie die zweite Strömungsmeßeinrichtung 3 sind darüber hinaus mit einer Kalibriereinrichtung 9 in Verbindung, welche ihrerseits an ein Ausgabegerät 10 angeschlossen ist. Das Heizelement 4 sowie der Sensor 5 befinden sich in parallel zueinander angeordneten Ebenen E1 und E2. Die Ebenen E1 und E2 sind senkrecht zur Strömungsrichtung S des Gases orientiert.

Die Funktion der Vorrichtung wird nun anhand der Fig. 2 erläutert. Im darin gezeigten Graphen ist der zeitliche Verlauf des vom Geber 4 abgegebenen thermischen Signals H1 und das vom Sensor 5 erfaßte thermische Signal H2 aufgetragen. Die Laufzeit L bzw. Phasendifferenz zwischen dem abgegebenen thermischen Signal H1 und dem erfaßten thermischen Signal H2 ermöglicht eine Ermittlung der Gasgeschwindigkeit und damit des Volumendurchflusses. Dieser erste Meßwert wird der Kalibriereinrichtung 9 zur Verfügung gestellt. Dort wird er mit einem zweiten Meßwert verglichen, der von der zweiten Strömungsmeßeinrichtung 3 der Kalibriereinrichtung 9 zugeführt wird. Der zweite Meßwert wird aus der zur Aufrechterhaltung einer konstanten Temperatur des Heizdrahts notwendigen Energie ermittelt. Sofern die Differenz zwischen dem ersten und dem zweiten Meßwert einen vorgegebenen Betrag übersteigt, wird in der Kalibriereinrichtung 9 ein Korrekturfaktor zur Korrektur des zweiten Meßwerts errechnet. Diese Korrektur wird wiederholend durchgeführt. Sie kann beispielsweise für jeden 10. zweiten Meßwert erfolgen. Damit gelingt es, eine besonders große Meßdynamik zu erzielen.

Bezugszeichenliste

1       Gasströmungsdurchgang
2       erste Strömungsmeßeinrichtung
3       zweite Strömungsmeßeinrichtung
4       Geber
5       Sensor
6       verengter Bereich
7       Rohr
8       Heizdraht
9       Kalibriereinrichtung
10      Ausgabegerät
H1      abgegebenes Heizsignal
H2      erfaßtes Heizsignal

L       Laufzeit
E1, E2  Ebenen
S       Strömungsrichtung des Gases

**Patentansprüche**

1.  Verfahren zur selbstkompensierenden Messung des Volumendurchflusses von Gasen, mit einem Gasströmungsdurchgang (1) sowie einer ersten (2) und einer zweiten Strömungsmeßeinrichtung (3) zur Messung des Volumendurchflusses, wobei die zweite Strömungsmeßeinrichtung (3) durch von der ersten Strömungsmeßeinrichtung (2) gewonnene erste Meßwerte kalibriert wird, **dadurch gekennzeichnet, daß** von einem im Gasströmungsdurchgang (1) angeordneten Geber (4) der ersten Strömungsmeßeinrichtung (2) ein thermisches Signal (H1) an das Gas abgegeben, das thermische Signal (H1) von einem stromabwärts angeordneten Sensor (5) der ersten Strömungsmeßeinrichtung (2) nach einer Laufzeit (L) erfaßt, und die ersten Meßwerte aus der Laufzeit (L) ermittelt werden.

2.  Verfahren nach Anspruch 1, wobei als thermisches Signal (H1) ein periodisches, vorzugsweise sinusförmiges, Signal abgegeben wird.

3.  Verfahren nach Anspruch 2, wobei die-Laufzeit (L) durch die Phasendifferenz zwischen dem abgegebenen thermischen Signal (H1) und einem vom Sensor (5) erfaßten thermischen Signal (H2) ermittelt wird.

4.  Verfahren nach einem der vorhergehenden Ansprüche, wobei die zweite Strömungsmeßeinrichtung (3) ein im Gasströmungsdurchgang (1) angeordnetes beheizbares Element (8) aufweist.

5.  Verfahren nach Anspruch 4, wobei zweite Meßwerte infolge der vom beheizbaren Element (8) an das Gas abgegebenen Wärmemenge ermittelt werden.

6. Verfahren nach einem der vorhergehenden Ansprüche, wobei die ersten und dazu korrespondierende zweite Meßwerte einer Kalibriereinrichtung (9) zugeführt und dort verglichen werden.

7. Verfahren nach Anspruch 6, wobei bei Überschreiten einer vorgegebenen Differenz zwischen den korrespondierenden ersten und den zweiten Meßwerten ein Korrekturfaktor zur Korrektur der zweiten Meßwerte ermittelt wird, so daß die zweiten Meßwerte an die ersten Meßwerte angeglichen werden.

8. Verfahren nach einem der vorhergehenden Ansprüche, wobei der Gasströmungsdurchgang (1) aus einem rohrartigen Körper (7) hergestellt ist, in dem der Geber (4), der Sensor (5) und das beheizbare Element (8) aufgenommen sind.

9. Verfahren nach einem der vorhergehenden Ansprüche, wobei der Geber (4) und der Sensor (5) in parallel zueinander stehenden Ebenen (E1, E2) angeordnet sind, die vorzugsweise senkrecht zur Strömungsrichtung (S) des Gases orientiert sind.

10. Verfahren nach einem der vorhergehenden Ansprüche, wobei der Geber (4) und der Sensor (5) als in den Gasströmungsdurchgang (1) ragende Stifte ausgebildet sind, die vorzugsweise um einen Winkel bezüglich der Mittelachse des rohrartigen Körpers (7) gegeneinander verstellt sind.

11. Verfahren nach einem der vorhergehenden Ansprüche, wobei der Geber (4) und/oder der Sensor (5) und/oder das beheizbare Element (8) als Film/e ausgebildet ist/sind, der/die auf der Innenwand des rohrartigen Körpers (7) angebracht ist/sind.

12. Verfahren nach einem der vorhergehenden Ansprüche, wobei der Sensor (5) in einem Abstand von mindestens 1 mm vom Geber (4) angeordnet ist.

13. Verfahren nach einem der vorhergehenden Ansprüche, wobei der rohrartige Körper (7) aus Glas, vorzugsweise Geräteglas, oder Kunststoff hergestellt ist.

14. Verfahren nach einem der vorhergehenden Ansprüche, wobei der rohrartige Körper (7) lösbar mit einer Heiz- und/oder Kalibriereinrichtung (9) verbunden ist.

15. Vorrichtung zur selbstkompensierenden Messung des Volumendurchflusses von Gasen, mit einem Gasströmungsdurchgang (1) sowie einer ersten (2) und einer zweiten Strömungsmeßeinrichtung (3), wobei die zweite Strömungsmeßeinrichtung (3) durch von der ersten Strömungsmeßeinrichtung (2) gewonnene Meßwerte kalibrierbar ist, **dadurch gekennzeichnet, daß** die erste Strömungsmeßeinrichtung (2) einen im Gasströmungsdurchgang (1) angeordneten Geber (4) zur Abgabe eines thermischen Signals (H1) an das Gas und einen stromabwärts angeordneten Sensor (5) zur Erfassung des thermischen Signals (H1) nach einer Laufzeit (L) aufweist, so daß aus der Laufzeit (L) die ersten Meßwerte ermittelbar sind.

16. Vorrichtung nach Anspruch 15, wobei das thermisches Signal (H1) ein periodisches, vorzugsweise sinusförmiges, Signal ist.

17. Vorrichtung nach Anspruch 15 oder 16, wobei die Laufzeit durch die Phasendifferenz zwischen dem abgegebenen thermischen Signal (H1) und einem vom Sensor (5) erfaßten thermischen Signal (H1) ermittelbar ist.

18. Vorrichtung nach einem der Ansprüche 15 bis 17, wobei die zweite Strömungsmeßeinrichtung (3) ein im Gasströmungsdurchgang (1) angeordnetes beheizbares Element (8) aufweist.

19. Vorrichtung nach Anspruch 18, wobei zweite Meßwerte infolge der vom beheizbaren Element (8) an das Gas abgegebenen Wärmemenge ermittelt werden.

20. Vorrichtung nach einem der Ansprüche 15 bis 19, wobei die ersten und dazu korrespondierende zweite Meßwerte einer Kalibriereinrichtung (9) zugeführt und dort verglichen werden.

21. Vorrichtung nach Anspruch 20, wobei bei Überschreiten einer vorgegebenen Differenz zwischen den korrespondierenden ersten und den zweiten Meßwerten ein Korrekturfaktor zur Korrektur der zweiten Meßwerte ermittelbar ist, so daß die zweiten Meßwerte an die ersten Meßwerte angleichbar sind.

22. Vorrichtung nach einem der Ansprüche 15 bis 21, wobei der Gasströmungsdurchgang (1) aus einem rohrartigen Körper (7) hergestellt ist, in dem der Geber (4), der Sensor (5) und das beheizbare Element (8) aufgenommen sind.

23. Vorrichtung nach einem der Ansprüche 15 bis 22, wobei der Geber (4) und der Sensor (5) in parallel zueinander stehenden Ebenen (E1, E2) angeordnet sind, die vorzugsweise senkrecht zur Strömungsrichtung (S) des Gases orientiert sind.

24. Vorrichtung nach einem der Ansprüche 15 bis 23, wobei der Geber (4) und der Sensor (5) als in den Gasströmungsdurchlaß (1) ragende Stifte ausgebildet sind, die vorzugsweise um einen Winkel bezüglich der Mittelachse des rohrartigen Körpers (7) gegeneinander verstellt sind.

25. Vorrichtung nach einem der Ansprüche 15 bis 24, wobei der Geber (4) und/oder der Sensor (5) und/oder das beheizbare Element (8) als Film/e ausgebildet ist/sind, der/die auf der Innenwand des rohrartigen Körpers (7) angebracht ist/sind.

26. Vorrichtung nach einem der Ansprüche 15 bis 25, wobei der Sensor (5) in einem Abstand von mindestens 1 mm vom Geber (4) angeordnet ist.

27. Vorrichtung nach einem der Ansprüche 15 bis 26, wobei der rohrartige Körper (7) aus Glas, vorzugsweise Geräteglas, oder Kunststoff hergestellt ist.

28. Vorrichtung nach einem der Ansprüche 15 bis 27, wobei der rohrartige Körper (7) lösbar mit einer Heizund/oder Kalibriereinrichtung (9) verbunden ist.

**Claims**

1. Method for the self-compensating measurement of the volumetric flow of gases, having a gas flow passage (1) and a first (2) and a second flowmeter device (3) for measuring the volumetric flow, the second flowmeter device (3) being calibrated by first measured values obtained from the first flowmeter device (2), **characterized in that** a thermal signal (H1) is transmitted to the gas by a transmitter (4), which is arranged in the gas flow passage (1), of the first flowmeter device (2), the thermal signal (H1) is picked up by a downstream sensor (5) of the first flowmeter device (2) after a certain transit time (L), and the first measured values are determined from the transit time (L).

2. Method according to Claim 1, in which a periodic, preferably sinusoidal, signal is transmitted as the thermal signal (H1).

3. Method according to Claim 2, in which the transit time (L) is determined by the phase difference between the transmitted thermal signal (H1) and a thermal signal (H2) picked up by the sensor (5).

4. Method according to one of the preceding claims, in which the second flowmeter device (3) has a heatable element (8) which is arranged in the gas flow passage (1).

5. Method according to Claim 4, in which second measured values are determined as a function of the amount of heat transmitted to the gas by the heatable element (8).

6. Method according to one of the preceding claims, in which the first measured values and corresponding second measured values are fed to a calibration device (9) and compared there.

7. Method according to Claim 6, in which, in the event of a predetermined difference between the corresponding first and the second measured values being exceeded, a correction factor for correcting the second measured values is determined, so that the second measured values are matched to the first measured values.

8. Method according to one of the preceding claims, in which the gas flow passage (1) is made from a tubular body (7) in which the transmitter (4), the sensor (5) and the heatable element (8) are accommodated.

9. Method according to one of the preceding claims, in which the transmitter (4) and the sensor (5) are arranged in mutually parallel planes (El, E2), which are preferably oriented perpendicular to the direction of flow (S) of the gas.

10. Method according to one of the preceding claims, in which the transmitter (4) and the sensor (5) are designed as pins which project into the gas flow passage (1) and which are preferably offset with respect to one another by an angle with regard to the center axis of the tubular body (7).

11. Method according to one of the preceding claims, in which the transmitter (4) and/or the sensor (5) and/or the heatable element (8) is/are designed as (a) film(s) which is/are arranged on the inner wall of the tubular body (7).

12. Method according to one of the preceding claims, in which the sensor (5) is arranged at a distance of at least 1 mm from the transmitter (4).

13. Method according to one of the preceding claims, in which the tubular body (7) is made from glass, preferably apparatus glass, or plastic.

14. Method according to one of the preceding claims, in which the tubular body (7) is releasably connected to a heating and/or calibration device (9).

15. Device for the self-compensating measurement of the volumetric flow of gases, having a gas flow passage (1) and a first (2) and a second flowmeter device (3), it being possible to calibrate the second flowmeter device (3) by measured values obtained from the first flowmeter device (2), **characterized in that** the first flowmeter device (2) has a transmitter (4) which is arranged in the gas flow passage (1) for transmitting a thermal signal (H1) to the gas, and a downstream sensor (5) for picking up the thermal signal (H1) after a transit time (L), so that the first measured values can be determined from the transit time (L).

16. Device according to Claim 15, in which the thermal signal (H1) is a periodic, preferably sinusoidal, signal.

17. Device according to Claim 15 or 16, in which the transit time can be determined by the phase difference between the transmitted thermal signal (H1) and a thermal signal (H2) picked up by the sensor (5).

18. Device according to one of Claims 15 to 17, in which the second flowmeter device (3) has a heatable element (8) which is arranged in the gas flow passage (1).

19. Device according to Claim 18, in which second measured values are determined as a function of the amount of heat transmitted to the gas by the heatable element (8).

20. Device according to one of Claims 15 to 19, in which the first measured values and corresponding second measured values are fed to a calibration device (9) and compared there.

21. Device according to Claim 20, in which, in the event of a predetermined difference between the corresponding first and the second measured values being exceeded, a correction factor for correcting the second measured values can be determined, so that the second measured values can be matched to the first measured values.

22. Device according to one of Claims 15 to 21, in which the gas flow passage (1) is made from a tubular body (7) in which the transmitter (4), the sensor (5) and the heatable element (8) are accommodated.

23. Device according to one of Claims 15 to 22, in which the transmitter (4) and the sensor (5) are arranged in mutually parallel planes (El, E2), which are preferably oriented perpendicular to the direction of flow (S) of the gas.

24. Device according to one of Claims 15 to 23, in which the transmitter (4) and the sensor (5) are designed as pins which project into the gas flow passage (1) and which are preferably offset with respect to one another by an angle with regard to the center axis of the tubular body (7).

25. Device according to one of Claims 15 to 24, in which the transmitter (4) and/or the sensor (5) and/or the heatable element (8) is/are designed as (a) film(s) which is/are arranged on the inner wall of the tubular body (7).

26. Device according to one of Claims 15 to 25, in which the sensor (5) is arranged at a distance of at least 1 mm from the transmitter (4).

27. Device according to one of Claims 15 to 26, in which the tubular body (7) is made from glass, preferably apparatus glass, or plastic.

28. Device according to one of Claims 15 to 27, in which the tubular body (7) is releasably connected to a heating and/or calibration device (9).

**Revendications**

1. Procédé destiné à la mesure auto-compensatrice du débit volume de gaz avec un passage d'écoulement de gaz (1) ainsi qu'un premier (2) et un deuxième dispositif de mesure d'écoulement (3) pour la mesure du débit volume, le deuxième dispositif de mesure d'écoulement (3) étant calibré par les premières valeurs mesurées obtenues du premier dispositif de mesure d'écoulement (2), **caractérisé par le fait qu'**un transmetteur (4) placé dans le passage d'écoulement de gaz (1) du premier dispositif de mesure d'écoulement (2) transmet un signal thermique (H1) au gaz, le signal thermique (H1) est saisi par un capteur (5) disposé en aval du premier dispositif de mesure d'écoulement (2) après une durée (L) et les premières mesures sont déterminées à partir de la durée (L).

2. Procédé selon la revendication 1, un signal périodique, de préférence sinusoidal, étant transmis en tant que signal thermique (H1).

3. Procédé selon la revendication 2, la durée (L) étant déterminée par la différence de phase entre le signal thermique (H1) transmis et un signal thermique (H2) saisi par le capteur (5).

4. Procédé selon une des revendications précédentes, le deuxième dispositif de mesure d'écoulement (3) présentant un élément chauffant (8) disposé dans le passage d'écoulement de gaz (1).

5. Procédé selon la revendication 4, les deuxièmes valeurs mesurées étant déterminées par suite de la quantité de chaleur transmise au gaz par l'élément chauffant (8).

**6.** Procédé selon une des revendications précédentes, les premières et les deuxièmes valeurs mesurées correspondantes étant appliquées à un dispositif de calibrage (9) et comparées.

**7.** Procédé selon la revendication 6, un coefficient de correction étant déterminé pour la correction des deuxièmes valeurs mesurées en cas de dépassement d'une différence définie entre les premières valeurs mesurées correspondantes et les deuxièmes valeurs mesurées de façon que les deuxièmes valeurs mesurées soient alignées aux premières valeurs mesurées.

**8.** Procédé selon une des revendications précédentes, le passage d'écoulement de gaz (1) étant établi à partir d'un corps tubulaire (7) dans lequel le transmetteur (4), le capteur (5) et l'élément chauffant (8) sont logés.

**9.** Procédé selon une des revendications précédentes, le transmetteur (4) et le capteur (5) étant disposés dans des plans en parallèle (E1, E2), lesquels sont orientés de préférence perpendiculairement au sens d'écoulement (S) du gaz.

**10.** Procédé selon une des revendications précédentes, le transmetteur (4) et le capteur (5) sont tels des tiges saillantes dans le passage d'écoulement de gaz (1), lesquelles sont décalées les unes par rapport aux autres d'un angle par rapport à l'axe médian du corps tubulaire (7).

**11.** Procédé selon une des revendications précédentes, le transmetteur (4) et / ou le capteur (5) et / ou l'élément chauffant (8) est/sont tel(s) un/des film(s), lequel(lesquels) est/sont placé(s) sur la paroi intérieure du corps tubulaire (7) .

**12.** Procédé selon une des revendications précédentes, le capteur (5) étant disposé à un intervalle d'1 mm minimum par rapport au transmetteur (4).

**13.** Procédé selon une des revendications précédentes, le corps tubulaire (7) étant fabriqué en verre, de préférence en verre pour appareillage, ou en matière plastique.

**14.** Procédé selon une des revendications précédentes, le corps tubulaire (7) étant relié de manière amovible à un dispositif de chauffage et / ou à un dispositif de calibrage (9).

**15.** Dispositif destiné à la mesure auto-compensatrice du débit volume de gaz avec un passage d'écoulement de gaz (1) ainsi qu'un premier (2) et un deuxième dispositif de mesure d'écoulement (3), le deuxième dispositif de mesure d'écoulement (3) pouvant être calibré par les valeurs mesurées obtenues du premier dispositif de mesure d'écoulement (2), **caractérisé par le fait que** le premier dispositif de mesure d'écoulement (2) présente un transmetteur (4) disposé dans le passage d'écoulement de gaz (1) pour la transmission d'un signal thermique (H1) au gaz et un capteur (5) disposé en aval pour la saisie du signal thermique (H1) après une durée (L), de façon à pouvoir déterminer les premières valeurs mesurées à partir de la durée (L).

**16.** Dispositif selon la revendication 15, le signal thermique (H1) étant un signal périodique, de préférence sinusoïdal.

**17.** Dispositif selon la revendication 15 ou 16, la durée pouvant être déterminée par la différence de phase entre le signal thermique transmis (H1) et un signal thermique saisi (H1) par le capteur (5).

**18.** Dispositif selon une des revendications 15 à 17, le deuxième dispositif de mesure d'écoulement (3) présentant un élément chauffant (8) disposé dans le passage d'écoulement de gaz (1).

**19.** Dispositif selon la revendication 18, les deuxièmes valeurs mesurées étant déterminées par suite de la quantité de chaleur transmise au gaz par l'élément chauffant (8).

**20.** Dispositif selon une des revendications 15 à 19, les premières et les deuxièmes valeurs mesurées correspondantes étant appliquées à un dispositif de calibrage (9) et comparées.

**21.** Dispositif selon la revendication 20, un coefficient de correction étant déterminé pour la correction des deuxièmes valeurs mesurées en cas de dépassement d'une différence définie entre les premières valeurs mesurées correspondantes et les deuxièmes valeurs mesurées de façon que les deuxièmes valeurs mesurées puissent être alignées aux premières valeurs mesurées.

**22.** Dispositif selon une des revendications 15 à 21, le passage d'écoulement de gaz (1) étant établi à partir d'un corps tubulaire (7) dans lequel le transmetteur (4), le capteur (5) et l'élément chauffant (8) sont logés.

**23.** Dispositif selon une des revendications 15 à 22, le transmetteur (4) et le capteur (5) étant disposés dans des plans en parallèle (E1, E2), lesquels sont orientés de préférence perpendiculairement au sens d'écoulement (S) du gaz.

**24.** Dispositif selon une des revendications 15 à 23, le transmetteur (4) et le capteur (5) sont tels des tiges saillantes dans le passage d'écoulement de gaz (1), lesquelles sont de préférence décalées les unes par rapport aux autres d'un angle par rapport à l'axe médian du corps tubulaire (7).

25. Dispositif selon une des revendications 15 à 24, le transmetteur (4) et / ou le capteur (5) et / ou l'élément chauffant (8) est/sont tel(s) un/des film(s), lequel(lesquels) est/sont placé(s) sur la paroi intérieure du corps tubulaire (7).

26. Dispositif selon une des revendications 15 à 25, le capteur (5) étant disposé à un intervalle d'1 mm au minimum par rapport au transmetteur (4).

27. Dispositif selon une des revendications 15 à 26, le corps tubulaire (7) étant fabriqué en verre, de préférence en verre pour appareillage, ou en matière plastique.

28. Dispositif selon une des revendications 15 à 27, le corps tubulaire (7) étant relié de manière amovible à un dispositif de chauffage et / ou à un dispositif de calibrage (9).

*Fig. 1*

*Fig. 2*